# FASCICULE DE BREVET EUROPEEN

(11) **EP 2 504 159 B1**
(45) Date de publication et mention de la délivrance du brevet: **05.03.2014**
(21) Numéro de dépôt: 10805453.7
(22) Date de dépôt: 24.11.2010
(51) Int. Cl.: B29D 30/26, B29D 30/24

(54) **DISPOSITIF D'ASSEMBLAGE D'UNE EBAUCHE DE PNEUMATIQUE COMPRENANT DES ORGANES AMOVIBLES ET SON PROCÉDÉ DE MONTAGE**
MONTAGEVORRICHTUNG FÜR REIFENROHLING MIT ENTFERNBAREN ELEMENTEN UND VERFAHREN ZUR ZUSAMMENSTELLUNG DER MONTAGEVORRICHTUNG
TYRE BLANK ASSEMBLY DEVICE INCLUDING REMOVABLE MEMBERS AND PROCESS OF ASSEMBLING THE DEVICE

(30) Priorité: 25.11.2009 FR 0958360; 30.11.2009 US 265258 P
(43) Date de publication de la demande: 03.10.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BABIN, Thomas, F-63000 Clermont-Ferrand (FR)
(74) Mandataire: Noel, Luminita
(86) Numéro de dépôt international: PCT/FR2010/052513
(87) Numéro de publication internationale: WO 2011/064500

(56) Documents cités:
- EP-A1- 1 612 033
- EP-A2- 1 389 520
- WO-A1-83/02297
- WO-A1-2004/045839
- WO-A1-2009/058296
- US-A- 4 427 473
- US-A- 6 004 250
- US-B1- 6 723 195

## Description

L'invention concerne la mise en forme des ébauches crues de pneumatiques pour véhicule.

Plus particulièrement, on connaît de tels dispositifs pour la mise en forme de l'ébauche du sommet du pneumatique qui comprennent une pluralité d'éléments juxtaposés circonférentiellement et qui constituent une surface de réception sur laquelle sont assemblés les composants formant le sommet du pneumatique.. Chacun de ces éléments comprend une surface d'appui radial sur une portion circonférentielle de la surface de réception, destinée à recevoir la partie radialement interne de l'ébauche. Cette surface présente souvent un galbe particulier en section radiale. Il est connu notamment que les éléments de mise en forme soient fixés par vissage sur un support du dispositif.

Chaque modèle de pneumatique nécessite un dispositif de mise en forme ayant une géométrie particulière. Or le dispositif précité ne permet pas de remplacer rapidement les éléments par ceux ayant la forme requise. Il pénalise donc la flexibilité de la production. Par ailleurs, pour certaines gammes de pneumatiques, les performances à atteindre excluent de pouvoir adapter le produit et rendent donc nécessaire le maintien d'une forme galbée.

Le document WO 2009/058 296 divulgue un dispositif conforme au préambule de la revendication 1. Le document EP-1389 520 divulgue un dispositif d'assemblage d'une ébauche.

Un but de l'invention est de pouvoir adapter rapidement le profil radial d'un dispositif d'assemblage du sommet d'une ébauche crue de pneumatique en fonction du modèle de pneumatique à fabriquer.

A cet effet, on prévoit selon l'invention un dispositif d'assemblage d'une ébauche crue du sommet d'un pneumatique, qui comprend :
- un support présentant une forme à symétrie de révolution,
- des organes de mise en forme de l'ébauche et
- pour chaque organe, des moyens de fixation amovible au support, aptes à fixer l'organe au support dès que l'organe est dans une position de réception sur le support, les organes, lorsqu'ils sont en position de réception, étant juxtaposés en constituant une surface de réception pour des composants formant le sommet du pneumatique

Ainsi, il suffit d'installer chaque organe de mise en forme sur le support pour qu'il s'y trouve immédiatement retenu et verrouillé en position. Le changement des organes de mise en forme du dispositif peut donc être effectué rapidement, ce qui permet d'adapter sans délai la forme du dispositif lorsqu'on change le modèle de pneumatique à produire. Ce temps de changement réduit se fait sans contrainte sur le galbe associé au modèle de pneumatique. De façon générale, l'invention n'impose pas de contrainte dimensionnelle sur le pneumatique. Il n'est plus nécessaire de disposer d'un grand nombre de dispositifs d'assemblage de diamètre et de profil radiaux différents, ce qui réduit sensiblement les investissements.

De préférence, pour chaque organe, les moyens de fixation amovible comprennent au moins un pêne présentant une face apte à coopérer avec au moins une face de l'organe ou du support pour placer l'organe en position de réception,

Avantageusement, ces faces sont agencées de sorte que la face de l'organe ou du support ne peut pas déplacer le pêne.

Avantageusement, le dispositif est agencé de sorte qu'il permet à chaque organe d'avoir une trajectoire radiale, par référence à un axe principal du dispositif, par rapport au support jusqu'à sa position de réception.

Il s'agit de la trajectoire la plus simple et la plus immédiate pour installer chaque organe sur le support. Le changement de forme du dispositif est donc particulièrement simple à effectuer.

Le dispositif d'assemblage selon l'invention pourra présenter en outre au moins l'une quelconque des caractéristiques suivantes :
- le dispositif comprend, pour chaque organe, au moins un pêne assurant la fixation de l'organe dans la position de réception ;
- il comprend deux pênes pour chaque organe ;
- le ou chaque pêne est monté coulissant.;
- la direction de coulissement s'étend dans un plan radial à un axe principal du dispositif;
- la direction de coulissement est parallèle à un axe principal du dispositif;
- le ou chaque pêne fait partie du support;
- il est agencé de sorte que le ou chaque pêne s'étend dans une trajectoire de l'organe jusqu'à la position de réception et de sorte que l'organe, lorsqu'il suit sa trajectoire, déplace le pêne hors de cette trajectoire ;
- il comprend des moyens de rappel du ou de chaque pêne vers une position dans laquelle il assure la fixation de l'organe dans la position de réception ;
- il est agencé de sorte que le pêne tend à placer l'organe dans la position de réception lorsque l'organe occupe au moins une position prédéterminée différente de la position de réception. Ainsi, le pêne favorise l'arrivée de l'organe de mise en forme en position de réception et donc sa fixation ;
- il est agencé de sorte que, lorsque l'organe occupe la position de réception, aucune sollicitation de l'organe ne peut déplacer le pêne. Ainsi, la facilité d'installation de chaque organe de mise en forme va de pair avec un bon maintien en place de ce dernier ; et
- le pêne présente une face apte à coopérer avec au moins une face de l'organe pour placer l'organe en position de réception, les faces étant agencées de sorte que la face de l'organe ne peut pas déplacer le pêne.

De préférence, le dispositif comprend pour chaque organe au moins un élément apte à positionner l'organe par rapport au support avant l'arrivée de l'organe en position de réception.

Ainsi, ce ou ces éléments de positionnement facilitent aussi l'installation des organes de mise en forme dans la position attendue pour respecter les caractéristiques dimensionnelles du pneumatique.

Avantageusement, le ou l'un des éléments de positionnement comprend un relief de centrage à symétrie de révolution autour d'un axe radial au support.

Avantageusement, le ou l'un des éléments de positionnement est apte à positionner l'organe par rapport au support suivant une direction circonférentielle du support.

De préférence, le dispositif comprend un organe de commande de déverrouillage pour libérer l'organe du support.

Dans un mode de réalisation, chaque organe de mise en forme constitue un sous-ensemble rigide.

En d'autres termes, il ne comprend pas de pièce mobile l'une par rapport à l'autre. C'est le support qui incorpore si besoin les pièces mobiles. On privilégie ainsi le fait que les organes amovibles ont une constitution relativement simple.

On prévoit également selon l'invention un procédé de montage d'un dispositif de mise en forme d'une ébauche crue de pneumatique, dans lequel :
- on installe des organes de mise en forme de l'ébauche en position de réception sur un support ; et
- des moyens automatisés de fixation amovible intégrés aux organes et/ou au support fixent chaque organe sur le support dès son placement en position de réception.

De préférence, les moyens automatisés comprennent pour chaque organe au moins un pêne présentant une face apte à coopérer avec au moins une face de l'organe ou du support pour placer l'organe en position de réception, les faces étant agencées de sorte que la face de l'organe ou du support ne peut pas déplacer le pêne.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en perspective d'une partie principale d'un dispositif de mise en forme selon l'invention sur laquelle trois des organes de mise en forme ont été ôtés ;
- la figure 2 est une vue à plus grande échelle d'un détail du dispositif de la figure 1 ;
- la figure 3 est une vue en coupe radiale suivant le plan III-III du dispositif de la figure 1, montrant un organe à distance du support ;
- les figures 4 à 6 sont des vues partielles analogues à la figure 3 montrant différentes étapes de la mise en place de l'organe sur le support ; et
- les figures 7 et 8 sont des vues analogues montrant différentes étapes de la séparation de l'organe et du support.

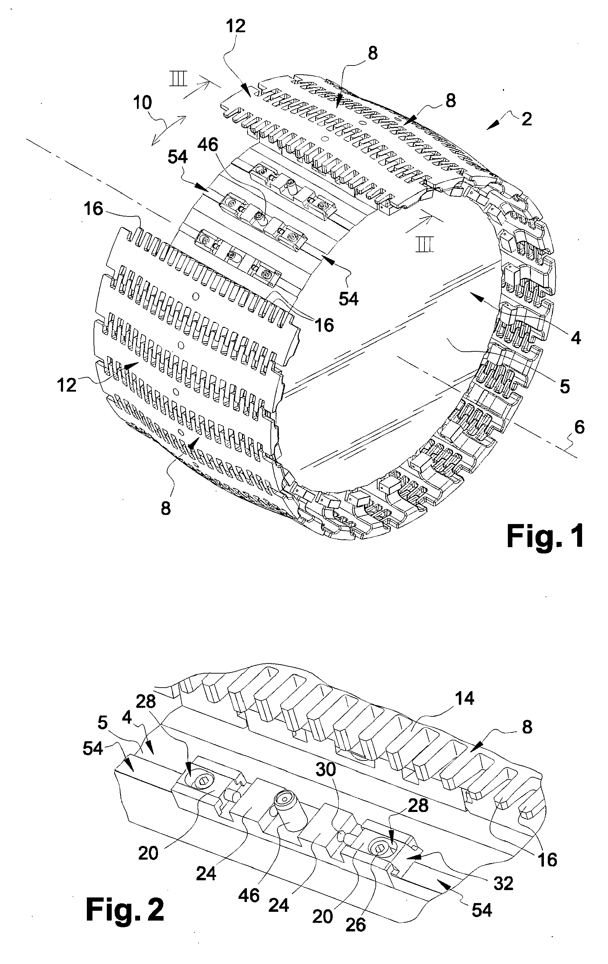

On a illustré à la figure 1 la partie principale d'un dispositif 2 pour la mise en forme d'une ébauche crue de pneumatique.

On rappelle qu'une ébauche crue de pneumatique est généralement formée par une carcasse sur laquelle est positionné un ensemble sommet destiné à former une bande de roulement du pneumatique. La carcasse et l'ensemble sommet comprennent des profilés en gomme telle que du caoutchouc non vulcanisé, ainsi que dans certains cas des fils de renfort. L'ébauche de l'ensemble sommet comprend des nappes de renfort formées de fils de renfort enrobés dans du caoutchouc, parallèles entre eux et formant un angle donné avec la direction circonférentielle du pneumatique. Cette ébauche comprend également la bande de roulement ainsi qu'un certain nombre de profilés en caoutchouc destinés à assurer le renforcement des extrémités axiales des nappes de renfort.

Lors de la vulcanisation de l'ébauche dans un moule, on observe une variation du positionnement relatif de la carcasse et de l'ensemble sommet. Leur position finale relative est imposée par le moule et donc connue. La variation du positionnement relatif étant quant à elle également connue, les caractéristiques géométriques du pneumatique peuvent être contrôlées en déterminant la position initiale relative de la carcasse et de l'ensemble sommet.

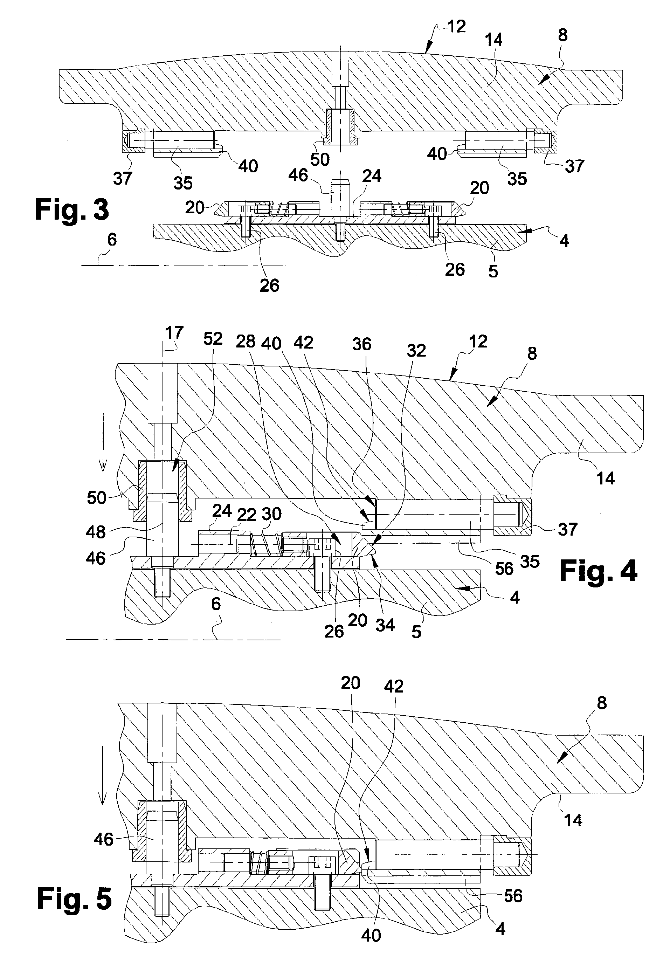

L'ébauche crue de l'ensemble sommet est réalisée et formée sur un dispositif d'assemblage et de mise en forme tel que le dispositif 2. Ce dernier comprend un support central 4 de forme générale cylindrique de révolution autour d'un axe 6, lui donnant l'aspect général d'un tambour. Le dispositif d'assemblage comprend une série d'organes de mise en forme 8 servant à la mise en forme de la portion circonférentielle de l'ébauche du sommet du pneumatique. Les organes 8, ou secteurs, sont fixés rigidement au support 6 par des moyens de fixation amovible comme on le verra plus loin. Les secteurs 8 présentent chacun une forme générale plate rectangulaire en plan et allongée suivant la direction axiale 6. Les secteurs sont placés côte à côte et se succèdent suivant la direction circonférentielle 10 du support 4 par référence à l'axe 6. Bien que trois des secteurs 8 aient été ôtés sur la figure 1 pour la clarté de la représentation, lors de l'utilisation la circonférence est intégralement formée par ces secteurs et constitue la surface de réception des composants formant le sommet du pneumatique. Chacun des secteurs 8 présente une face externe 12 de mise en forme servant d'appui, suivant une direction radiale à l'axe 6, pour une portion circonférentielle de la surface interne de l'ébauche. Comme on le voit notamment sur la figure 3, la face 12 présente ici un galbe dans un plan radial à l'axe 6, lui donnant une forme convexe. Elle présente aussi un galbe dans un plan perpendiculaire à cet axe. La géométrie de cette face définit la géométrie initiale de l'ébauche avant sa vulcanisation et donc aussi les caractéristiques géométriques correspondantes du pneumatique après cette opération.

Chaque face 12 est définie par un corps principal 14 du secteur correspondant. Ce corps présente, sur ses côtés longitudinaux latéraux parallèles à l'axe 6, des découpes en forme de dents ou de créneaux donnant à ces côtés une allure de peigne. Les dents 16 définissent entre elles des espaces qui permettent d'accueillir les dents du secteur contigu sur une partie de leur longueur. Les secteurs contigus sont donc imbriqués circonférentiellement à l'image de peignes dont les dents s'interpénètrent les uns dans les autres. La face 12 s'étend jusqu'aux extrémités des dents 16. Chacun des secteurs 8 est globalement symétrique par rapport à un plan de symétrie 17 perpendiculaire à l'axe 6.

A chacun des secteurs 8 sont associés des moyens de fixation et de verrouillage portés à la fois par le secteur 8 et le support 4. Ces moyens sont symétriques de part et d'autre du plan 17 de sorte que nous ne décrirons dans la suite que les moyens visibles à gauche sur la figure 3.

Pour chaque secteur 8, le support 4 comprend d'un côté du plan 17 un pêne 20 formant en l'espèce un coulisseau monté mobile à coulissement par rapport au bâti 5 du support 4 suivant une direction 22 parallèle à l'axe 6. Il est pour cela monté dans un guide-pêne 24 rigidement fixé au bâti, en l'espèce par deux vis 26 s'étendant symétriquement par rapport au plan 17. Le pêne 20 est guidé à coulissement dans le guide-pêne au niveau d'un tronçon arrière et d'un tronçon médian du pêne. Le guide-pêne 24 est formé d'une seule pièce pour les deux pênes 20 associés au secteur 8. Chaque vis 26 s'étend à travers une lumière 28 ménagée suivant la direction radiale dans le pêne 20, ainsi que dans des orifices du guide-pêne et du bâti 5. A chaque pêne 20 est associé un ressort de rappel 30 dont une extrémité avant est en butée contre un épaulement arrière du pêne et une extrémité arrière est en butée contre le guide-pêne. Le ressort est enroulé sur un tronçon du pêne.

L'extrémité avant du pêne présente deux faces planes orientées vers l'avant et inclinées l'une par rapport à l'autre. La face externe 32 est orientée en direction opposée à l'axe 6, au contraire de la face interne 34.

Le corps 14 du secteur 8 présente un logement recevant un poussoir 35 monté mobile à coulissement par rapport au corps 14 suivant une direction parallèle à l'axe 6. Le poussoir 35 présente une face arrière 36 plane et perpendiculaire à l'axe 6. Le secteur 8 porte un bouton 37 fixé à l'extrémité arrière du poussoir 35 et permettant d'actionner ce dernier pour le faire coulisser vers l'arrière. Le logement du poussoir, qui est formé dans un prolongement radial du corps 14 s'étendant en saillie de ce dernier en direction de l'axe 6, présente un talon 40 formant une gâche et présentant deux faces 42 sur ses bords. Les faces sont disposées pour réaliser un appui surface contre surface avec la face inférieure 34 du pêne. A cette fin, les faces 42 sont planes et inclinées de façon adaptée.

Pour chaque secteur 8, le support 4 porte un pion de centrage 46 s'étendant en saillie de la circonférence du bâti 5 et du guide-pêne, suivant une direction radiale. Le pion 46 est fixé au bâti 5 à travers un orifice du guide-pêne. Il présente une symétrie de révolution autour d'un axe 48 radial à l'axe 6 et inscrit dans le plan 17, une face latérale de forme générale cylindrique et une extrémité externe chanfreinée.

Le secteur 8 porte un fourreau 50 logé dans un orifice inférieur 52 du corps 14 s'étendant au centre du secteur 8 et passant par le plan 17. Le fourreau est formé de façon à accueillir le pion 46 à partir d'une extrémité inférieure du fourreau et présente une face cylindrique de dimensions voisines de celles de la face latérale du pion 46.

L'installation du secteur 8 sur le support 4 s'effectue de la façon suivante. On suppose que ces derniers se trouvent dans la position relative illustrée à la figure 3.

On amène le secteur 8 sur le support en lui donnant une trajectoire rectiligne radiale à l'axe 6.

En référence à la figure 4, au cours de ce mouvement, le pion 46 pénètre dans le fourreau 50 à partir de l'extrémité inférieure de ce dernier. On réalise ainsi un centrage du centre du secteur 8 par rapport au support 4 suivant la direction circonférentielle 10 et suivant la direction axiale 6. On fixe aussi son orientation autour d'un axe parallèle à l'axe 6.

L'extrémité arrière du talon 40 vient en butée contre la face supérieure 32 du pêne 20. Ce dernier, sollicité par le ressort 30, se trouve dans sa position de repos, la plus en avant, et s'étend dans la trajectoire du secteur 8. L'inclinaison de la face 32 et les coefficients de frottement résultant du choix des matériaux du pêne et du corps 14 ainsi que de leurs états de surface sont tels que, au cours de sa trajectoire radiale, le talon 40 déplace le pêne 20 en le poussant vers l'arrière en direction du pion 46, à l'encontre de la sollicitation exercée par le ressort 30.

En référence à la figure 5, ce déplacement s'interrompt lorsque l'extrémité arrière du talon franchit l'extrémité avant du pêne 20.

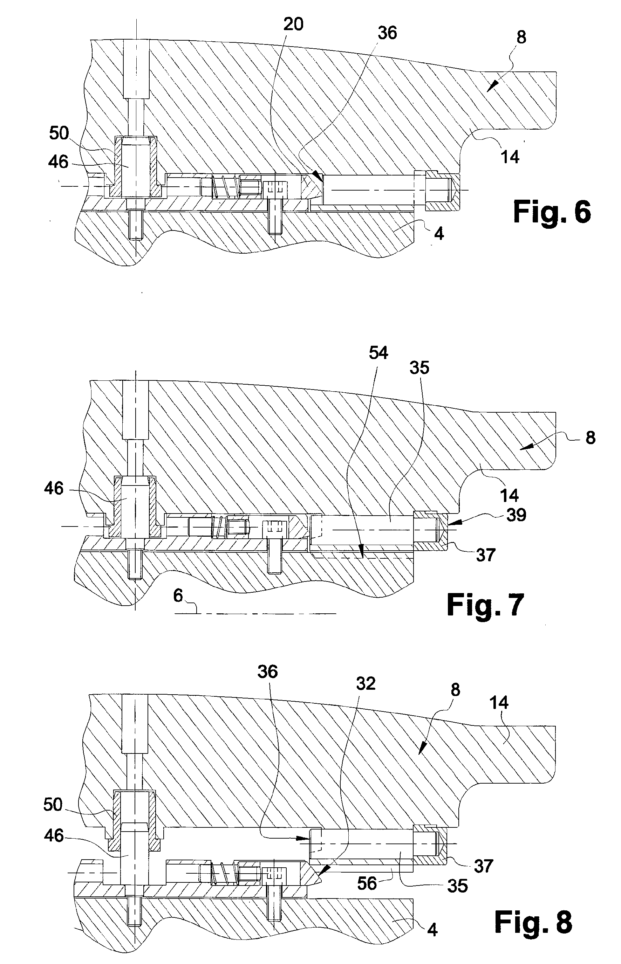

En référence à la figure 6, après ce franchissement, le secteur 8 poursuit sa trajectoire et vient en contact avec le bâti 5. Ce dernier présente une rainure rectiligne 54 accueillant à ce stade une nervure rectiligne 56 portée par le prolongement du secteur 8. La nervure et la rainure ont des dimensions telles que leur emboîtement achève le centrage du secteur 8 par rapport au support 4 suivant la direction circonférentielle 10, en rectifiant si besoin la position angulaire du secteur 8 autour de l'axe 48 du pion. Après que l'extrémité arrière du talon a franchi l'extrémité avant du pêne, ce dernier est poussé vers l'avant par le ressort 30. La face inférieure 34 du pêne vient donc en contact avec les faces 42 sur lesquelles elle glisse. Cela pousse le secteur 8 sur le support 4 en direction radiale et tend à le placer dans sa position de réception illustrée à la figure 6.

La figure 6 illustre en effet la position de réception du secteur 8 sur le support 4 qui est aussi sa position de fixation à ce dernier et celle dans laquelle il est utilisé pour la mise en forme de l'ébauche. Le pion 46 est entièrement reçu dans le fourreau 50. La nervure 56 est emboîtée dans la rainure 54.

Comme on le voit, les moyens de fixation amovible de l'organe sont aptes à fixer le secteur 8 au support 4 pour le retenir en position dès qu'il atteint sa position de réception.

Le pêne 20 est dans sa position de repos et en appui par sa face inférieure 34 contre les faces 42 du talon et forme un obstacle à l'éloignement du secteur 8 par rapport au support 4 suivant la direction radiale. L'inclinaison des faces 34 et 42 est en effet choisie, en combinaison avec le coefficient de frottement des surfaces les constituant, de sorte qu'aucune sollicitation du secteur 8 sur le pêne 20 ne peut faire reculer ce dernier pour libérer le secteur 8. On se trouve ainsi en présence d'une coopération irréversible entre ces faces. En d'autres termes, autant la face 34 a pu solliciter si nécessaire les faces 42 pour achever de placer le secteur 8 en position de réception, et faire avancer le pêne 20, autant les faces 42 ne peuvent pas faire reculer le pêne pour libérer le secteur 8 et lui faire quitter sa position de réception. Ainsi, lorsque le secteur 8 est soumis à un effort de centrifugation, il ne peut pas être éjecté, rendant ainsi les moyens de verrouillage particulièrement fiables.

Naturellement, le fonctionnement qui vient d'être décrit se produit simultanément de l'autre côté du secteur 8 au niveau des autres moyens de fixation et de verrouillage.

Lorsqu'on souhaite ôter le secteur 8, par exemple pour le remplacer au moyen d'un secteur dont la face 12 présente une forme différente, on opère comme suit.

On suppose que le secteur se trouve dans la position de la figure 6, à savoir en position de réception et verrouillé au support 4.

En référence à la figure 7, on exerce sur le bouton 37 une pression 39 vers l'arrière, c'est-à-dire en direction du pêne 20 et du pion 46. Cette pression entraîne le recul du poussoir 35 qui, en appui par sa face arrière 36 contre l'extrémité du pêne 20, provoque son recul. Les moyens de verrouillage se trouvent ainsi déverrouillés.

En référence à la figure 8, tout en maintenant cette pression, on peut déplacer le secteur 8 suivant la direction radiale pour l'éloigner du support 4 . Au cours de ce mouvement, l'extrémité avant du pêne 20 parcourt la face 36 du poussoir, puis l'extrémité du talon. Après l'éloignement du secteur 8, le pêne reprend sa position étendue en étant sollicité par son ressort de rappel. On se retrouve alors dans la configuration de la figure 4.

Le déverrouillage des moyens de fixation s'effectue sur chacun d'eux de part et d'autre du plan 17. L'appui sur les deux boutons 37 en sens opposés constitue un mouvement naturel et simple à réaliser.

De préférence, lorsque les nervures 56 viennent en appui contre le fond des rainures 54, la face 34 du pêne n'a pas parcouru vers l'avant l'intégralité des faces 42 du talon 40. Le pêne conserve donc une marge de déplacement vers l'avant. Si les pièces venaient à s'user au niveau des nervure ou des rainures, le pêne assurerait ainsi un rattrapage du jeu radial par appui sur les faces 42.

L'invention peut être mise en oeuvre pour les ébauches crues de pneumatiques des roues de véhicules de type léger, poids lourd ou génie civil.

Bien entendu, on pourra apporter à l'invention de nombreuses modifications sans sortir du cadre de celle-ci.

On pourrait prévoir que chaque secteur 8 est associé à un pêne unique. On pourrait prévoir que le ou les pênes associés à un secteur 8 sont portés par ce dernier. On peut prévoir que le pêne soit mobile à rotation et non à coulissement.

On pourra doter le poussoir 35 et le bouton 37 de moyens de rappel vers l'avant, par exemple sous la forme d'un ressort.

Les moyens de fixation peuvent ne pas comprendre une gâche et un pêne. Il peut s'agir de moyens de fixation par clipsage ou encliquetage, mettant ainsi en oeuvre une déformation élastique temporaire d'une pièce au moins.

## Revendications

1. Dispositif (2) d'assemblage d'une ébauche crue du sommet d'un pneumatique, qui comprend :
- un support présentant une forme à symétrie de révolution (4),
- des organes (8) de mise en forme de l'ébauche, et
- pour chaque organe, des moyens (20, 35) de fixation amovible au support, comprenant au moins un pêne (20) et aptes à fixer l'organe au support dès que l'organe (8) est dans une position de réception sur le support,
les organes, lorsqu'ils sont en position de réception, étant juxtaposés en constituant une surface de réception pour des composants formant le sommet du pneumatique.
**caractérisé en ce que** le pêne présente une face (34) apte à coopérer avec au moins une face (42) de l'organe ou du support pour placer l'organe en position de réception, les faces étant agencées de sorte que la face de l'organe ou du support ne peut pas déplacer le pêne.

2. Dispositif selon la revendication précédente, agencé de sorte qu'il permet à chaque organe (8) d'avoir une trajectoire radiale, par référence à un axe principal (6) du dispositif, par rapport au support (4) jusqu'à sa position de réception.

3. Dispositif selon au moins l'une quelconque des revendications précédentes qui comprend deux pênes (20) pour chaque organe.

4. Dispositif selon au moins l'une quelconque des revendications précédentes dans lequel le ou chaque pêne est monté coulissant.

5. Dispositif selon la revendication précédente dans lequel la direction de coulissement s'étend dans un plan radial à un axe principal (6) du dispositif.

6. Dispositif selon la revendication 4 ou 5 dans lequel la direction de coulissement est parallèle à un axe principal (6) du dispositif.

7. Dispositif selon au moins l'une quelconque des revendications précédentes dans lequel le ou chaque pêne (20) fait partie du support.

8. Dispositif selon au moins l'une quelconque des revendications précédentes agencé de sorte que le ou chaque pêne (20) s'étend dans une trajectoire de l'organe (8) jusqu'à la position de réception et de sorte que l'organe, lorsqu'il suit sa trajectoire, déplace le pêne hors de cette trajectoire.

9. Dispositif selon au moins l'une quelconque des revendications précédentes qui comprend des moyens de rappel (30) du ou de chaque pêne (20) vers une position dans laquelle il assure la fixation de l'organe dans la position de réception.

10. Dispositif selon au moins l'une quelconque des revendications précédentes qui comprend pour chaque organe (8) au moins un élément (46, 54, 56) apte à positionner l'organe (8) par rapport au support (4) avant l'arrivée de l'organe en position de réception.

11. Dispositif selon la revendication précédente dans lequel le ou l'un des éléments de positionnement comprend un relief de centrage (46) à symétrie de révolution autour d'un axe radial au support (4).

12. Dispositif selon au moins l'une quelconque des revendications 10 ou 11, dans lequel le ou l'un des éléments de positionnement (54, 56) est apte à positionner l'organe (8) par rapport au support (4) suivant une direction circonférentielle (10) du support.

13. Dispositif selon au moins l'une quelconque des revendications précédentes qui comprend un organe (37) de commande de déverrouillage pour libérer l'organe (8) du support (4).

14. Dispositif selon au moins l'une quelconque des revendications précédentes dans lequel chaque organe de mise en forme (8) constitue un sous-ensemble rigide.

15. Procédé de montage d'un dispositif (2) d'assemblage d'une ébauche crue du sommet d'un pneumatique, **caractérisé en ce que** :
- on installe des organes (8) de mise en forme de l'ébauche en position de réception sur un support (4) ; et
- des moyens automatisés (20, 35) de fixation amovible intégrés aux organes et/ou au support, fixent chaque organe sur le support dès son placement en position de réception, les moyens comprenant pour chaque organe (8) au moins un pêne (20) présentant une face (34) apte à coopérer avec au moins une face (42) de l'organe ou du support pour placer l'organe en position de réception, les faces étant agencées de sorte que la face de l'organe ou du support ne peut pas déplacer le pêne.

## Patentansprüche

1. Vorrichtung (2) zum Zusammenbau eines Rohlings des Scheitels eines Luftreifens, die enthält:
- einen Träger, der eine Form mit Drehsymmetrie (4) aufweist,
- Organe (8) zum Formen des Rohlings, und
- für jedes Organ Einrichtungen (20, 35) zur lösbaren Befestigung am Träger, die mindestens einen Riegel (20) enthalten und das Organ am Träger befestigen können, sobald das Organ (8) in einer Empfangsstellung auf dem Träger ist,
wobei die Organe, wenn sie in der Empfangsstellung sind, aneinander angrenzen, indem sie eine Empfangsfläche für den Scheitel des Luftreifens formende Bauteile bilden,
**dadurch gekennzeichnet, dass** der Riegel eine Seite (34) aufweist, die mit mindestens einer Seite (42) des Organs oder des Trägers zusammenwirken kann, um das Organ in der Empfangsstellung anzuordnen, wobei die Seiten so ausgebildet sind, dass die Seite des Organs oder des Trägers den Riegel nicht verschieben kann.

2. Vorrichtung nach dem vorhergehenden Anspruch, die so ausgebildet ist, dass sie es jedem Organ (8) ermöglicht, eine radiale Bahn in Bezug auf eine Hauptachse (6) der Vorrichtung bezüglich des Trägers (4) bis in seine Empfangsstellung zu haben.

3. Vorrichtung nach mindestens einem der vorhergehenden Ansprüche, die zwei Riegel (20) für jedes Organ enthält.

4. Vorrichtung nach mindestens einem der vorhergehenden Ansprüche, wobei der oder jeder Riegel gleitend montiert ist.

5. Vorrichtung nach dem vorhergehenden Anspruch, wobei die Gleitrichtung sich in einer Ebene radial zu einer Hauptachse (6) der Vorrichtung erstreckt.

6. Vorrichtung nach Anspruch 4 oder 5, wobei die Gleitrichtung parallel zu einer Hauptachse (6) der Vorrichtung ist.

7. Vorrichtung nach mindestens einem der vorhergehenden Ansprüche, wobei der oder jeder Riegel (20) Teil des Trägers ist.

8. Vorrichtung nach mindestens einem der vorhergehenden Ansprüche, die so, dass der oder jeder Riegel (20) sich in einer Bahn des Organs (8) bis in die Empfangsstellung erstreckt, und so ausgebildet ist, dass das Organ, wenn es seiner Bahn folgt, den Riegel nach außerhalb dieser Bahn verschiebt.

9. Vorrichtung nach mindestens einem der vorhergehenden Ansprüche, die Rückstelleinrichtungen (30) des oder jedes Riegels (20) in eine Stellung enthält, in der er die Befestigung des Organs in der Empfangsstellung gewährleistet.

10. Vorrichtung nach mindestens einem der vorhergehenden Ansprüche, die für jedes Organ (8) mindestens ein Element (46, 54, 56) enthält, das das Organ (8) bezüglich des Trägers (4) vor der Ankunft des Organs in der Empfangsstellung positionieren kann.

11. Vorrichtung nach dem vorhergehenden Anspruch, wobei das oder eines der Positionierelement(e) ein Zentrierrelief (46) mit Drehsymmetrie um eine Achse radial zum Träger (4) enthält.

12. Vorrichtung nach mindestens einem der Ansprüche 10 oder 11, wobei das oder eines der Positionierelement(e) (54, 56) das Organ (8) bezüglich des Trägers (4) gemäß einer Umfangsrichtung (10) des Trägers positionieren kann.

13. Vorrichtung nach mindestens einem der vorhergehenden Ansprüche, die ein Organ (37) zur Entriegelungssteuerung enthält, um das Organ (8) vom Träger (4) zu lösen.

14. Vorrichtung nach mindestens einem der vorhergehenden Ansprüche, wobei jedes Formgebungsorgan (8) eine steife Teileinheit bildet.

15. Montageverfahren einer Vorrichtung (2) zum Zusammenbau eines Rohlings des Scheitels eines Luftreifens, **dadurch gekennzeichnet, dass**:
- Formgebungsorgane (8) des Rohlings in der Empfangsstellung auf einem Träger (4) installiert werden; und
- automatisierte Einrichtungen (20, 35) zur lösbaren Befestigung, die in die Organe und/oder den Träger integriert sind, jedes Organ am Träger befestigen, sobald es in der Empfangsstellung angeordnet wurde, wobei die Einrichtungen für jedes Organ (8) mindestens einen Riegel (20) enthalten, der eine Seite (34) aufweist, die mit mindestens einer Seite (42) des Organs oder des Trägers zusammenwirken kann, um das Organ in der Empfangsstellung anzuordnen, wobei die Seiten so ausgebildet sind, dass die Seite des Organs oder des Trägers den Riegel nicht verschieben kann.

## Claims

1. Device (2) for assembling a green blank form of the crown of a tyre, comprising:
- a support having a shape that exhibits symmetry of revolution (4),
- members (8) for shaping the green tyre, and
- for each member, means (20, 35) for removable attachment to the support, comprising at least one bolt (20) and able to fix the member to the support as soon as the member (8) is in a reception position on the support,
the members, when they are in the reception position, being juxtaposed to form a reception surface for components that form the crown of the tyre,
**characterized in that** the bolt (20) has a face (34) able to collaborate with at least one face (42) of the member or of the support in order to place the member in the reception position, the faces being arranged so that the face of the member or of the support cannot move the bolt.

2. Device according to the preceding claim, arranged in such a way that it allows each member (8) to have a path that is radial, with reference to a main axis (6) of the device, with respect to the support (4) as far as its reception position.

3. Device according to at least either one of the preceding claims, which comprises two bolts (20) for each member.

4. Device according to at least any one of the preceding claims, in which the or each bolt is mounted such that it can slide.

5. Device according to the preceding claim, in which the direction of sliding runs in a plane that is radial to a main axis (6) of the device.

6. Device according to Claim 4 or 5 in which the direction of sliding is parallel to a main axis (6) of the device.

7. Device according to at least any one of the preceding claims, in which the or each bolt (20) forms part of the support.

8. Device according to at least any one of the preceding claims, arranged so that the or each bolt (20) runs in a path of the member (8) as far as the reception position and in such a way that the member, when it follows its path, moves the bolt off this path.

9. Device according to at least any one of the preceding claims, which comprises return means (30) for returning the or each bolt (20) to a position in which it fixes the member in the reception position.

10. Device according to at least any one of the preceding claims, which comprises for each member (8) at least one element (46, 54, 56) able to position the member (8) with respect to the support (4) before the member reaches the reception position.

11. Device according to the preceding claim, in which the or one of the positioning elements comprises a centring relief (46) with symmetry of revolution about an axis that is radial to the support (4).

12. Device according to at least either one of Claims 10 and 11, in which the or one of the positioning elements (54, 56) is able to position the member (8) with respect to the support (4) in a circumferential direction (10) of the support.

13. Device according to at least any one of the preceding claims, which comprises an unlocking control member (37) for releasing the member (8) from the support (4).

14. Device according to at least any one of the preceding claims, in which each shaping member (8) constitutes a rigid subassembly.

15. Method of building a device (2) for assembling a green blank form of the crown of a tyre, **characterized in that**:
- members (8) for shaping the green tyre are installed in a reception position on a support (4); and
- automated means (20, 35) of removable attachment incorporated into the members and/or into the support, fix each member to the support as soon as it has been placed in the reception position, the means comprising, for each member (8), at least one bolt (20) having a face (34) able to collaborate with at least one face (42) of the member or of the support in order to place the member in the reception position, the faces being arranged so that the face of the member or of the support cannot move the bolt.
